# EUROPEAN PATENT SPECIFICATION

(11) **EP 4 301 521 B1**
(45) Date of publication and mention of the grant of the patent: **01.07.2026**
(21) Application number: 21708989.5
(22) Date of filing: 01.03.2021
(51) Int. Cl.: B05B 3/10, B05B 12/14, B05B 15/55, B05B 15/555, F16L 55/48, G01F 1/7082, G01F 1/7086, G01F 11/12, B05B 13/04, B05B 12/00, F16L 55/11, B05B 12/08

(54) **METHOD OF MONITORING CLEANING OF COATING APPARATUS, METHOD OF CLEANING COATING APPARATUS, COATING APPARATUSES, AND ROBOT SYSTEM**
ÜBERWACHUNGSVERFAHREN EINER REINIGUNG EINER BESCHICHTUNGSVORRICHTUNG, REINIGUNGSVERFAHREN EINER BESCHICHTUNGSVORRICHTUNG, BESCHICHTUNGSVORRICHTUNGEN, UND ROBOTERANLAGE
PROCÉDE DE SURVEILLANCE DU NETTOYAGE D'UN APPAREIL DE REVÊTEMENT, PROCÉDE DE NETTOYAGE D'UN APPAREIL DE REVÊTEMENT, APPAREILS DE REVÊTEMENTS ET SYSTÈME ROBOTISÉ

(43) Date of publication of application: 10.01.2024
(73) Proprietor: ABB SCHWEIZ AG, 5400 Baden (CH)
(72) Inventor: FINNESTAD, Yngve, 4316 Sandnes (NO); TRYDAL, Jakob, 4355 Kvernaland (NO); MOSSIGE, Morten, 4365 Nærbø (NO); SANDVIK, Bjarne, 4344 Bryne (NO)
(74) Representative: Kransell & Wennborg KB
(86) International application number: PCT/EP2021/055010
(87) International publication number: WO 2022/184226

(56) References cited:
- DE-A1- 10 064 065
- DE-A1- 102018 131 380
- GB-A- 2 300 717
- US-A- 5 122 192
- US-A1- 2004 075 848
- US-A1- 2009 128 136
- US-A1- 2017 066 000

## Description

### Technical Field

The present disclosure generally relates to coating apparatuses. In particular, a method of monitoring cleaning of an apparatus for applying a coating medium to an object, apparatuses for applying a coating medium to an object, and a robot system comprising an industrial robot and an apparatus for applying a coating medium to an object, are provided.

### Background

In order to apply a coating medium to an object, such as the application of paint to a motor vehicle body part, the coating medium may be atomized by a rotating bell cup and applied to the object, e.g. by means of shaping air and electrostatic charging of the coating medium. Various types of liquid based coating mediums, such as paint or varnish, may be applied to an object in this way.

When the bell cup pulverizes liquid paint, the bell cup is also contaminated by the paint. In case a first paint remains on the bell cup, a subsequent second paint will be contaminated by the first paint. The coating apparatus comprising the bell cup therefore needs to be cleaned frequently, for example when shifting from one color to another.

The cleaning may comprise supplying solvent to the bell cup. However, in case a cleaning medium line is blocked, the cleaning medium may not reach the bell cup and the bell cup therefore remains contaminated. Reasons for that the cleaning medium does not reach the bell cup with a correct flow include blockings and/or restrictions of the cleaning medium line, and that a cleaning medium valve does not open correctly.

Some prior art solutions rely on a manual inspection of the bell cup and/or of the cleaning medium line. This is not ideal in an automated factory setting. In some other prior art solutions, a flow meter is used to measure a flow of cleaning medium. Such solutions are expensive and add complexity to the process.

In some car painting applications, several cars can pass through a painting station before detecting that the paint was contaminated. These cars may have to be sanded down manually to remove the contaminated paint before being repainted. This is very expensive, time consuming and disrupts the production flow.

Furthermore, the flow rate from a color changer to the bell cup through a coating medium line must be accurately controlled to ensure a paint surface with high quality. Traditionally, the measurement and/or dosing of the paint flow is made with a mechanical device, such as a gear pump or a gear flow meter, in physical contact with the coating medium. However, if gears are located inside the coating medium line, a volume of paint is trapped inside the gears. This amount of paint is wasted every time the apparatus is cleaned, e.g. when a new color is requested.

US 2016030962 A1 discloses a method of monitoring a rotary paint atomizer including determining a target rotational speed, a target air flow rate, a target torque, and a target electrostatic current; and measuring an operating rotational speed, an operating air flow rate, an operating torque, and an operating electrostatic current. The method includes detecting at least one of a first condition in which the operating rotational speed differs from the target rotational speed, a second condition in which the operating air flow rate differs from the target air flow rate, a third condition in which the operating torque differs from the target torque, and a fourth condition in which the operating electrostatic current differs from the target electrostatic current. After detecting, the method includes producing an indicator signal indicative of at least one of the first, second, third, and fourth conditions. A rotary paint atomizer robot system is also disclosed.

US 5 122 192 A discloses a method and an apparatus for cleaning an electrostatic spray or coating head for an electrostatic coating device.

### Summary

One object of the present disclosure is to provide a method of monitoring cleaning of an apparatus for applying a coating medium to an object, which method provides a reliable verification of a successful cleaning operation.

A further object of the present disclosure is to provide a method of monitoring cleaning of an apparatus for applying a coating medium to an object, which method provides a less complicated verification of a successful cleaning operation.

A still further object of the present disclosure is to provide a method of monitoring cleaning of an apparatus for applying a coating medium to an object, which method is cost-effective and/or enables a cost-effective design of the apparatus.

A still further object of the present disclosure is to provide a method of monitoring cleaning of an apparatus for applying a coating medium to an object, which method solves several or all of the foregoing objects in combination.

A still further object of the present disclosure is to provide an apparatus for applying a coating medium to an object, which apparatus solves one, several or all of the foregoing objects in combination.

According to a first aspect, there is provided a method of monitoring cleaning of an apparatus for applying a coating medium to an object, the apparatus comprising a rotatable deflecting element for atomizing the coating medium; and a cleaning medium line for conducting a cleaning medium to the deflecting element; where the method comprises commanding performance of a cleaning operation comprising delivery of the cleaning medium through the cleaning medium line towards the deflecting element while rotating the deflecting element; collecting operational values of at least one operational parameter of the apparatus for the cleaning operation; comparing the operational values with reference values of the at least one operational parameter for the cleaning operation; and determining whether the cleaning operation was successful or unsuccessful based on the comparison.

If the cleaning medium line providing the cleaning medium is blocked, either intentionally or by failure, no cleaning medium will reach the deflecting element and the deflecting element will thereby not be cleaned. This can also happen if the cleaning medium channel is not blocked, but there is no more cleaning medium left in a cleaning medium source. These situations will lead to an uncleaned deflecting element, and the next object might be contaminated.

The method is based on the finding that several operational parameters of the apparatus have characteristic patterns over time for a successful cleaning operation. For example, if the deflecting element rotates at a certain speed when it is hit by the cleaning medium at a certain flow, a characteristic curve of the rotational speed versus time can be seen. Thus, a sudden deceleration of the rotational speed of the deflecting element can be seen for a successful cleaning operation. In case for some reason the cleaning medium does not reach the deflecting element during the cleaning operation, no decrease in rotational speed of the deflecting element will be detected. Furthermore, in case the flow of cleaning medium to the deflecting element is too high or too low, the drop in rotational speed of the deflecting element will not be as expected. Also in this case, it can be concluded by the method that the cleaning operation was not successful.

By comparing the operational values with the reference values, the method enables an automatic verification of flow of cleaning medium to the deflecting element. The method can be performed with operational values from one or more indirect sensor readings. Thus, the method does not necessarily need introduction of sensors that are not already existing in many coating apparatuses. The method is therefore cost-effective.

The method enables an early detection of an unsuccessful cleaning operation. In this way, it can be avoided that a coating medium is applied to further objects with a contaminated deflecting element. This results in large cost saving and time savings.

The method may further comprise issuing a warning upon determining that the cleaning operation was not successful. The warning may for example be a visual and/or an audible warning.

Throughout the present disclosure, the cleaning medium may be a solvent. The coating medium may be a liquid, such as paint or varnish. The deflecting element may be a rotatable bell cup.

The method may be performed automatically, for example every time the cleaning medium channel is opened to supply cleaning medium. The method may further comprise controlling the deflecting element to rotate at a constant speed during the cleaning operation.

The cleaning medium line may be a line between a cleaning medium source and the deflecting element. The cleaning medium line may be a line dedicated for the cleaning medium. Alternatively, or in addition, the cleaning medium line may be common with a coating medium line for conducting a coating medium to the deflecting element.

The at least one operational parameter may comprise a parameter indicative of a rotational speed of the deflecting element. The at least one operational parameter may thus comprise the rotational speed of the deflecting element. Parameters indicative of rotational speed include rotational position, rotational speed and rotational acceleration of the deflecting element. The apparatus may for example comprise a rotation sensor for determining the rotational speed. Many conventional rotation sensors can measure the rotational speed of the deflecting element very precisely.

The apparatus may further comprise a turbine arranged to drive rotation of the deflecting element and arranged to be driven by pressurized air. The pressurized air may be regulated and measured by the apparatus, e.g. based on a target rotational speed of the deflecting element.

The apparatus may comprise an air line for supplying pressurized air to the turbine. The apparatus may further comprise a pressure source, such as a compressor, for supplying pressurized air to the air line. The apparatus may further comprise a pressure sensor for determining an air pressure in the air line.

The at least one operational parameter may be a parameter indicative of the pressurized air. The at least one operational parameter may thus comprise the pressure of the air to the turbine. A higher air pressure will be provided to the turbine to increase the rotational speed of the deflecting element when the rotational speed has dropped due to being hit by the cleaning medium. A sharp increase in air pressure, such as an increase of at least 2 bar, can thus be seen during a successful cleaning operation.

The apparatus may further comprise an air flow regulator arranged to regulate a flow of the pressurized air. In this case, the at least one operational parameter may be a parameter indicative of a state of the air flow regulator. For example, the air flow regulator may open more to provide an increased air pressure to the turbine to increase the rotational speed of the deflecting element when the rotational speed has dropped due to being hit by the cleaning medium. A sharp increase in opening, such as an increase of at least 5 %, of the air flow regulator can thus be seen during a successful cleaning operation. One example of a parameter indicative of the state of the air flow regulator is thereby an opening of the air flow regulator. The air flow regulator may be a regulator valve.

According to a second aspect, there is provided an apparatus for applying a coating medium to an object, the apparatus comprising a rotatable deflecting element for atomizing the coating medium; a cleaning medium line for conducting a cleaning medium to the deflecting element; and a control system comprising at least one data processing device and at least one memory having a computer program stored thereon, the computer program comprising program code which, when executed by the at least one data processing device, causes the at least one data processing device to perform the steps of commanding performance of a cleaning operation comprising delivery of the cleaning medium through the cleaning medium line towards the deflecting element while commanding the deflecting element to rotate; collecting operational values of at least one operational parameter of the apparatus for the cleaning operation; comparing the operational values with reference values of the at least one operational parameter for the cleaning operation; and determining whether the cleaning operation was successful or unsuccessful based on the comparison. The computer program may thus be an algorithm for estimating if a flow of cleaning medium needed to sufficiently clean the deflecting element is or was present during the cleaning operation.

The apparatus of the second aspect may be of any type as described for the first aspect and vice versa.

According to an example, not encompassed by the wording of the claims but considered as useful for understanding the invention, there is provided a method of cleaning an apparatus for applying a coating medium to an object, the method comprising moving a sealing member in a coating medium line forward towards an outlet of the apparatus while the sealing member seals against an interior surface of the coating medium line; and detecting passing of the sealing member in the coating medium line. The passing of the sealing member through the coating medium line may be used to push a previously used coating medium forward. In this way, waste of coating medium can be eliminated substantially or completely. Thus, the coating medium can be used for application to the object instead of being wasted.

The sealing member may be a solid body, such as a plug. The solid body may be rigid or flexible. In any case, the sealing member is configured to provide a barrier between two different mediums, such as paint downstream of the sealing member and air or solvent upstream of the sealing member. The sealing member thus prevents mixing of the two mediums.

The sealing member may be introduced to the coating medium line in various ways, either manually or automatically. Alternatively, the sealing member may initially be positioned in a starting position, e.g. at an upstream end of the coating medium line, and then move downstream in the coating medium line from the starting position. The sealing member may be moved downstream in the coating medium line by introducing a pressurized medium, such as pressurized air, pressurized cleaning medium or pressurized coating medium, upstream of the sealing member that pushes the sealing member.

The method may further comprise returning the sealing member to the starting position. The sealing member may be returned to the starting position through the coating medium line. Alternatively, the sealing member may be returned to the starting position through a return line, parallel with the coating medium line. The return line may function as a magazine housing a plurality of sealing members.

Alternatively, the sealing member may be removed at the downstream point. In this case, a new sealing member may be introduced to the starting position each time. Each sealing member may thus be of single use or of multiple use.

The detection of the passing of the sealing member may be made by means of ultrasonic waves sent through the coating medium line.

According to an example, not encompassed by the wording of the claims but considered as useful for understanding the invention, there is provided an apparatus for applying a coating medium to an object, the apparatus comprising a coating medium line; an outlet; a first coating medium source containing a first coating medium; a second coating medium source containing a second coating medium; a valve arrangement configured to independently bring each of the first coating medium source and the second coating medium source in communication with the outlet through the coating medium line; and a detection device configured to detect passing of a sealing member through the coating medium line; wherein the coating medium line is substantially unobstructed, or unobstructed, from the valve arrangement, through the detection device, and to a downstream point downstream of the detection device.

The apparatus of this example, not encompassed by the wording of the claims but considered as useful for understanding the invention, may be of any type as described for the non-claimed example and vice versa. The valve arrangement may be a color changer in case the coating medium is paint.

In contrast to prior art solutions comprising one or more gear wheels or other mechanical devices inside the coating medium line, the unobstructed coating medium line according to this example, not encompassed by the wording of the claims but considered as useful for understanding the invention, enables the sealing member to be run through the coating medium line, e.g. to change colors.

Since the detection device does not obstruct the coating medium line, the coating medium can flow unobstructedly through the detection device. In addition to being configured to detect passing of the sealing member, the detection device may be configured to measure a flow of the coating medium in the coating medium line.

The detection device may be a flow detection device. The coating medium line may be substantially straight, or straight, at least from the valve arrangement to the downstream point.

The downstream point may be a restriction in the coating medium line. According to one example, the downstream point is a restriction, such as a step reducing an internal diameter of the coating medium line.

The apparatus may further comprise a flow control valve for controlling the flow in the coating medium line. The flow control valve may be arranged downstream of the detection device. In this case, the downstream point may be constituted by the flow control valve or the downstream point may be positioned between the detection device and the flow control valve. Alternatively, or in addition, the coating medium line may be substantially unobstructed, or unobstructed, through the valve arrangement in case the flow control valve is located downstream of the detection device.

The detection device and the flow control valve can be used as a flow regulating device. In this case, the flow control valve may be controlled in a closed loop based on flow measurements from the detection device.

Alternatively, the flow control valve may be arranged upstream of the detection device, e.g. in the valve arrangement. In this case, the starting position for the sealing member may be downstream of the flow control valve, such as immediately downstream of the flow control valve, and upstream of the detection device. In case the flow control valve is positioned upstream of the valve arrangement, the coating medium line may be substantially unobstructed, or unobstructed, through the valve arrangement.

The flow control valve may be a proportional valve. Alternatively, or in addition, the flow control valve may be electrically controlled.

The detection device may comprise an ultrasonic device configured to send ultrasonic waves to the fluid in the coating medium line; sense echo signals induced in the fluid by the ultrasonic waves; and convert the echo signals to electronic response data. The ultrasonic device may comprise transducers located outside the coating medium line. In this way, the passing of the sealing member can be detected without obstructing the coating medium line.

Since the ultrasonic device can be used to accurately determine various properties of the flow, the detection of the passing of a sealing member is an advantageous bonus feature of the ultrasonic device. As a possible alternative, the ultrasonic device may be an optical sensor.

The apparatus may further comprise the sealing member arranged to move in the coating medium line through the detection device while the sealing member seals against an interior surface of the coating medium line.

The apparatus may be configured to force the sealing member to move in the coating medium line through the detection device. To this end, the apparatus may be configured to introduce a pressurized medium, such as pressurized air, pressurized cleaning medium or pressurized coating medium, upstream of the sealing member that pushes the sealing member.

The sealing member may be arranged to move in the coating medium line from the valve arrangement, through the detection device and to the downstream point while the sealing member seals against the interior surface.

The apparatus may be configured to force the sealing member to move in the coating medium line from the valve arrangement, through the detection device and to the downstream point. To this end, the apparatus may be configured to introduce a pressurized medium, such as pressurized air, pressurized cleaning medium or pressurized coating medium, upstream of the sealing member that pushes the sealing member.

According to a further aspect, there is provided a robot system comprising an industrial robot and an apparatus according to the present disclosure. The industrial robot may comprise a manipulator programmable in three or more axes, such as six or seven axes. The apparatus may be carried by the manipulator.

### Brief Description of the Drawings

Further details, advantages and aspects of the present disclosure will become apparent from the following description taken in conjunction with the drawings, wherein:
- Fig. 1:: schematically represents a side view of a robot system comprising an industrial robot and a coating apparatus;
- Fig. 2:: schematically represents a block diagram of the coating apparatus;
- Fig. 3:: schematically represents a rotational speed of a bell cup of the coating apparatus during a cleaning operation;
- Fig. 4:: schematically represents a block diagram of a further coating apparatus;
- Fig. 5a:: schematically represents a perspective view of an ultrasonic device of the coating apparatus in Fig. 4;
- Fig. 5b:: schematically represents a cross-sectional side view of the ultrasonic device;
- Fig. 6:: schematically represents a block diagram of the coating apparatus in Fig. 4 when a sealing member has moved in a coating medium line; and
- Fig. 7:: schematically represents a block diagram of a further coating apparatus.

### Detailed Description

In the following, a method of monitoring cleaning of an apparatus for applying a coating medium to an object, a method of cleaning an apparatus for applying a coating medium to an object, apparatuses for applying a coating medium to an object, and a robot system comprising an industrial robot and an apparatus for applying a coating medium to an object, will be described. The same or similar reference numerals will be used to denote the same or similar structural features.

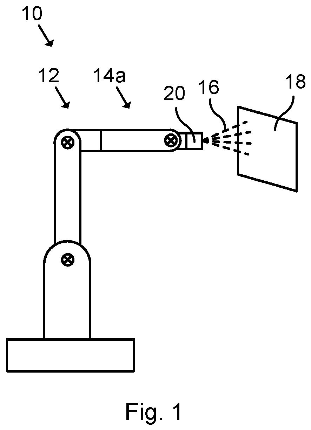

Fig. 1 schematically represents a side view of a robot system 10. The robot system 10 comprises an industrial robot 12 and a coating apparatus 14a. The industrial robot 12 comprises a manipulator movable in at least three axes, such as in six or seven axes. The apparatus 14a is configured to apply a coating medium 16 to an object 18, as shown in Fig. 1. The coating medium 16 may for example be paint. The object 18 may for example be a body part of a vehicle.

Fig. 1 further shows that the apparatus 14a comprises an atomizer 20. The atomizer 20 is one example of an outlet as described herein. The atomizer 20 is here positioned at a distal end of the manipulator.

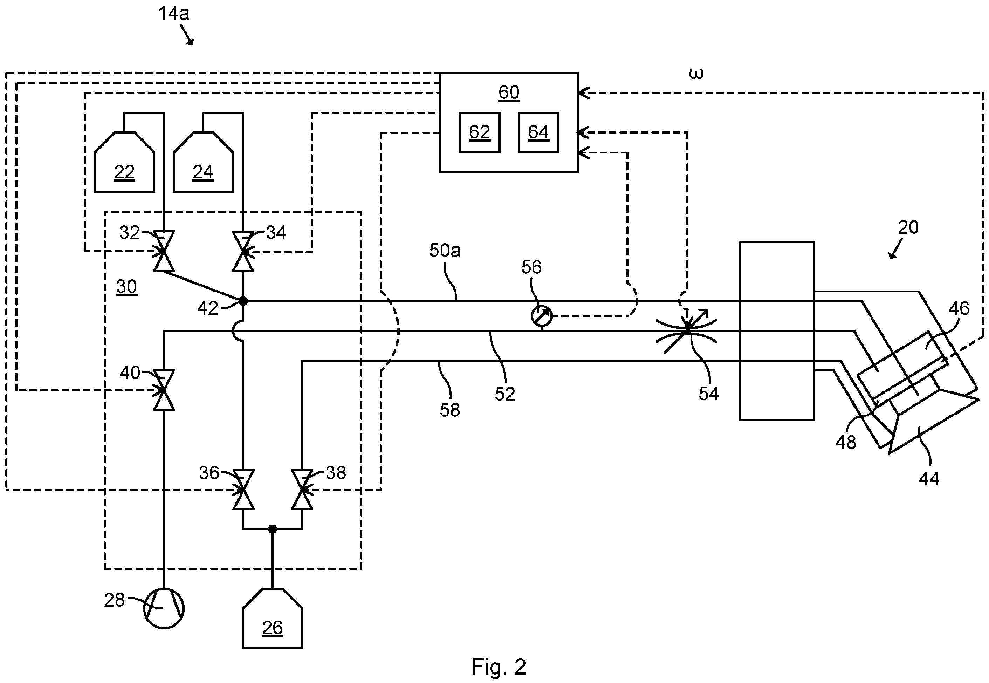

Fig. 2 schematically represents a block diagram of the apparatus 14a. The apparatus 14a of this example further comprises a first coating medium source 22 containing pressurized coating medium 16 of a first type (e.g. paint of a first color), a second coating medium source 24 containing pressurized coating medium 16 of a second type (e.g. paint of a second color), a cleaning medium source 26 containing pressurized cleaning medium (e.g. solvent) and a compressor 28 for supplying compressed air. Although only two coating medium sources 22 and 24 are illustrated, the apparatus 14a may comprise at least ten different coating medium sources, such as 20 to 30 different coating medium sources (e.g. paint sources).

The apparatus 14a further comprises a valve arrangement 30. The valve arrangement 30 of this example further comprises a first coating medium valve 32 associated with the first coating medium source 22, a second coating medium valve 34 associated with the second coating medium source 24, a first cleaning medium valve 36 associated with the cleaning medium source 26, a second cleaning medium valve 38 associated with the cleaning medium source 26, and a compressor valve 40 associated with the compressor 28. Each of the first coating medium valve 32, the second coating medium valve 34, the first cleaning medium valve 36, the second cleaning medium valve 38 and the compressor valve 40 is here exemplified as a 2/2 valve. The valve arrangement 30 here functions as a color changer.

The valve arrangement 30 of this example further comprises a junction 42. The first coating medium valve 32, the second coating medium valve 34 and the first cleaning medium valve 36 are in direct fluid communication with the junction 42.

The atomizer 20 comprises a rotatable deflecting element, here exemplified as a bell cup 44. The bell cup 44 is configured to atomize the coating medium 16.

The atomizer 20 further comprises a turbine 46. The turbine 46 is arranged to drive rotation of the bell cup 44. The turbine 46 is driven by pressurized air.

The atomizer 20 further comprises a rotation sensor 48. The rotation sensor 48 measures a rotational speed ω of the bell cup 44. The rotation sensor 48 may for example comprise a rotary encoder disc.

The apparatus 14a further comprises a coating medium line 50a. The coating medium line 50a here extends from the junction 42 to the bell cup 44. The valve arrangement 30 is thus configured to independently bring each of the first coating medium source 22, the second coating medium source 24 and the cleaning medium source 26 in fluid communication with the atomizer 20 through the coating medium line 50a.

The apparatus 14a further comprises an air line 52. The air line 52 here extends from the compressor valve 40 to the turbine 46.

The apparatus 14a further comprises an air flow regulator 54, here exemplified as a regulator valve. The air flow regulator 54 is positioned on the air line 52. By controlling its opening, the air flow regulator 54 is configured to regulate a flow of pressurized air supplied to the turbine 46.

The apparatus 14a further comprises a pressure sensor 56. The pressure sensor 56 is positioned on the air line 52. The pressure sensor 56 is configured to read an air pressure in the air line 52. In this example, the air flow regulator 54 is positioned between the pressure sensor 56 and the turbine 46.

The apparatus 14a further comprises a cleaning medium line 58. The cleaning medium line 58 is configured to conduct cleaning medium to the bell cup 44, in this example to the outside of the bell cup 44. The cleaning medium line 58 here extends from the second cleaning medium valve 38 to the bell cup 44. In this example, only cleaning medium is passed through the cleaning medium line 58.

The apparatus 14a further comprises a control system 60. The control system 60 comprises a data processing device 62 and a memory 64 having a computer program stored thereon. The computer program comprises program code which, when executed by the data processing device 62 causes the data processing device 62 to perform, and/or command performance of, various steps as described herein. The control system 60 is in signal communication with the valve arrangement 30. In this example, the control system 60 is in signal communication with, to command opening and closing of, each of the first coating medium valve 32, the second coating medium valve 34, the compressor valve 40, the first cleaning medium valve 36 and the second cleaning medium valve 38.

The control system 60 is further in signal communication with the air flow regulator 54 to command an opening degree thereof. Optionally, the air flow regulator 54 is configured to send a signal indicative of its opening degree back to the control system 60.

The pressure sensor 56 is in signal communication with the control system 60. Thus, the pressure sensor 56 is arranged to send a signal representative of the pressure in the air line 52 to the control system 60. In case no pressure sensor 56 is used, and the air flow regulator 54 is not configured to send a signal indicative of its opening degree back to the control system 60, a degree of opening commanded to the air flow regulator 54 can be used to estimate the flow through the air line 52.

The rotation sensor 48 is in signal communication with the control system 60. Thus, the rotation sensor 48 is arranged to send a signal representative of the rotational speed ω of the bell cup 44 to the control system 60.

In order to atomize the coating medium 16, the rotational speed ω of the bell cup 44 is controlled. Different target rotational speeds for the bell cup 44 may be set for different types of coating mediums 16. The bell cup 44, the rotation sensor 48 and the air flow regulator 54 are previously known as such.

To control the rotational speed ω of the bell cup 44, the control system 60 receives the pressure in the air line 52 from the pressure sensor 56 and the rotational speed ω from the rotation sensor 48, and controls the air flow regulator 54 in a closed control loop. For some coating mediums 16, such as various paints, the target rotational speed of the bell cup 44 may for example be 45 krpm.

When the atomizer 20 atomizes the coating medium 16 by means of the bell cup 44, both sides of the bell cup 44 are contaminated with the coating medium 16. In order to clean the bell cup 44, e.g. in order to change colors of paint, performance of a cleaning operation is commanded by the control system 60. The cleaning operation can be performed automatically at each change of coating mediums 16.

The cleaning operation can be initiated by commanding the second cleaning medium valve 38 to open and commanding the bell cup 44 to rotate at a target rotational speed. When the second cleaning medium valve 38 is open, the cleaning medium is supplied to the outside of the bell cup 44. To end the cleaning operation, the second cleaning medium valve 38 is commanded to close. The cleaning operation may also comprise supplying the cleaning medium through the coating medium line 50a by means of the first cleaning medium valve 36 to clean the inside of the bell cup 44.

The cleaning medium may be applied through the cleaning medium line 58 to the bell cup 44 at a flow of 1000 ml/min. The flow may be set automatically or manually. The characteristics of cleaning mediums are relatively identical, at approximately 0.9 g/cc (gram per cubic centimeter).

In case for some reason the cleaning medium does not reach the bell cup 44, the bell cup 44 will not be cleaned. This typically results in costly and timeconsuming consequences.

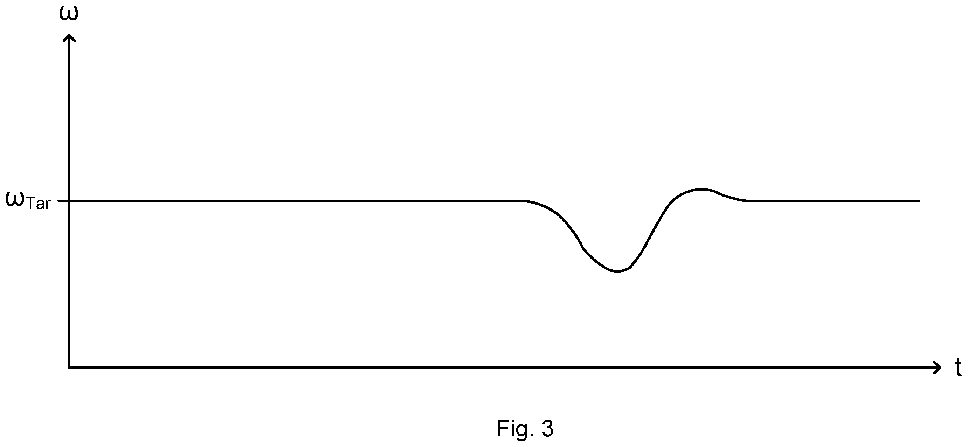

Fig. 3 schematically represents the rotational speed ω of the bell cup 44 over time during a typical cleaning operation comprising a supply of cleaning medium through the cleaning medium line 58. The rotational speed ω of the bell cup 44 is recorded throughout the cleaning operation, from the opening to the closing of the second cleaning medium valve 38. The rotational speed ω of the bell cup 44 is one example of an operational parameter according to the present disclosure.

As shown in Fig. 3, the rotational speed ω is stable at a target rotational speed ω_{Tar} before the cleaning medium hits the bell cup 44. The target rotational speed ω_{Tar} is used in the closed loop control of the air flow regulator 54 based on pressure readings from the pressure sensor 56 and the measured rotational speed ω of the bell cup 44 from the rotation sensor 48. When the cleaning medium through the cleaning medium line 58 hits the bell cup 44, the rotational speed ω decreases. The speed may for example decrease with 500 rpm when the cleaning medium hits the bell cup 44.

The cleaning medium may be delivered to the bell cup 44 in pulses. In Fig. 3, one pulse of cleaning medium is shown. Each pulse of cleaning medium may for example have a time duration of 1-2 s.

In response to the drop in rotational speed ω, the closed control loop in the control system 60 controls the air flow regulator 54 to increase the air flow to the turbine 46 to compensate. This change in flow will result in a change of rotational speed ω of the bell cup 44 to compensate for the speed drop and bring the bell cup 44 back to the target rotational speed ω_{Tar}, here with a slight overshoot until the rotational speed ω again stabilizes at the target rotational speed ω_{Tar}.

For successful pulses of cleaning medium, i.e. pulses of cleaning medium that reach the bell cup 44 with a correct flow, the patterns of the rotational speed ω over time look the same, or substantially the same. The patterns are thus repeated for each pulse of cleaning medium hitting the bell cup 44. Such patterns thereby constitute examples of reference values of the rotational speed ω of the bell cup 44.

The control system 60 compares the collected operational values of the rotation speed with the reference values of the rotational speed ω. For example, if the rotational speed ω drops more than 500 rpm during the cleaning operation, it can be concluded that the cleaning operation was successful. That is, cleaning medium with a sufficient flow has hit the bell cup 44.

If there is no significant change in rotational speed ω of the bell cup 44 (e.g. if the rotational speed ω drops less than 500 rpm), it can be concluded that the cleaning operation was not successful. Reasons for this may be that the cleaning medium line 58 is blocked and/or that the cleaning medium source 26 is empty.

In case it is concluded that the cleaning operation is not successful, a warning is immediately and automatically issued to the operator. The warning may be a visual warning and/or an audible warning. Furthermore, a coating medium application process may be automatically stopped in response to concluding that the cleaning operation was not successful. In this way, a countermeasure can be taken to remedy the source of error to avoid contamination in subsequent coating medium processes. The inventors have carried out tests showing that the method works satisfactorily to distinguish between successful and unsuccessful cleaning operations. Since the pressure sensor 56, the air flow regulator 54 and the rotation sensor 48 are known as such, no dedicated sensors for determining whether or not the cleaning operation was successful need to be introduced for the method.

Further examples of operational parameters (in addition to the rotational speed ω of the bell cup 44) of the apparatus 14a for the cleaning operation that can be collected and compared with reference values to determine whether or not the cleaning operation was successful include air pressure, (e.g. as measured by the pressure sensor 56) and the opening degree of the air flow regulator 54.

A corresponding method may be used to detect success of a cleaning operation comprising delivery of the cleaning medium to the bell cup 44 through the coating medium line 50a.

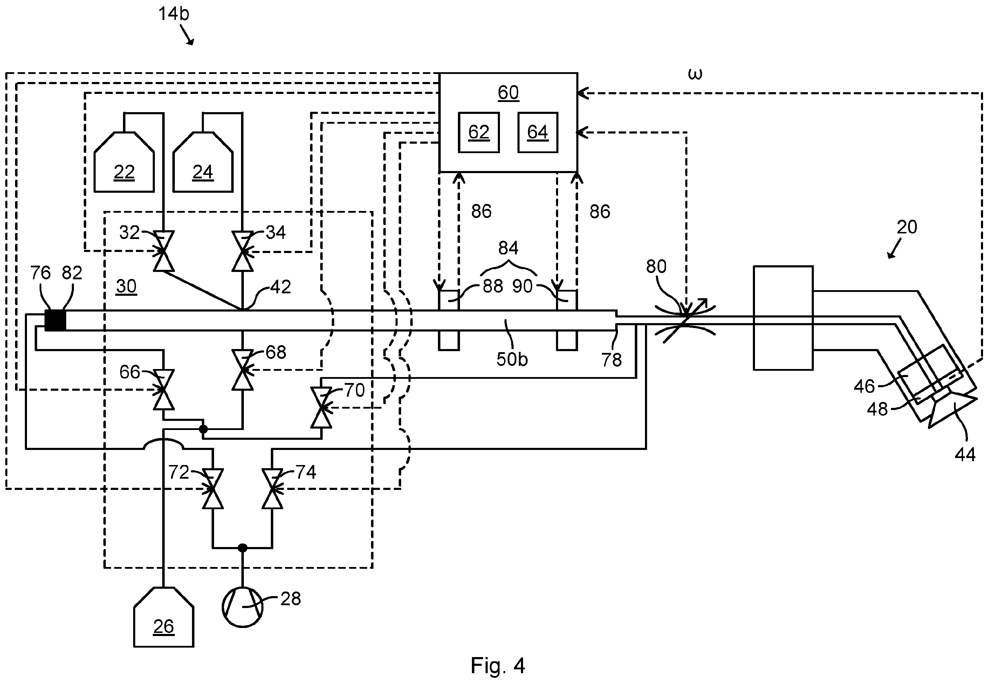

Fig. 4 schematically represents a block diagram of a further coating apparatus 14b. Mainly differences with respect to Fig. 2 will be described. In addition to the first coating medium valve 32 and the second coating medium valve 34, the valve arrangement 30 of this example comprises a first cleaning medium valve 66, a second cleaning medium valve 68, and a third cleaning medium valve 70, each associated with the cleaning medium source 26. The valve arrangement 30 of this example further comprises a first compressor valve 72 and a second compressor valve 74, each associated with the compressor 28. Each of the first cleaning medium valve 66, the second cleaning medium valve 68, the third cleaning medium valve 70, the first compressor valve 72 and the second compressor valve 74 is here exemplified as a 2/2 valve.

The apparatus 14b of this example further comprises a coating medium line 50b. The coating medium line 50b extends from a starting position 76 to the bell cup 44. The coating medium line 50b comprises a step 78, where the internal area of the coating medium line 50b is reduced, as seen in a downstream direction. The step 78 is one example of a downstream point according to the present disclosure.

The apparatus 14b of this example further comprises a flow control valve 80, here exemplified as an electrically controlled proportional valve. The flow control valve 80 is configured to control the flow in the coating medium line 50b. In this example, the flow control valve 80 is positioned in the coating medium line 50b between the step 78 and the atomizer 20.

The first cleaning medium valve 66 and the first compressor valve 72 are in direct fluid communication with the starting position 76. The second cleaning medium valve 68 is in direct fluid communication with the junction 42.

The second cleaning medium valve 68 of this example is in direct fluid communication with the junction 42. The third cleaning medium valve 70 of this example is in direct fluid communication with the coating medium line 50b between the step 78 and the flow control valve 80. The second compressor valve 74 is in direct fluid communication with the coating medium line 50b between the step 78 and the flow control valve 80.

The apparatus 14b further comprises a sealing member 82. The sealing member 82 is positioned inside the coating medium line 50b. In Fig. 4, the sealing member 82 is positioned at the starting position 76. The sealing member 82 seals against an interior surface of the coating medium line 50b.

The sealing member 82 is here exemplified as a solid and flexible plug. The sealing member 82 is configured to provide a barrier between two mediums in the coating medium line 50b to prevent mixing of the two mediums. The sealing member 82 may be referred to as a "pig".

The apparatus 14b further comprises an ultrasonic device 84. The valve arrangement 30 is here positioned between the starting position 76 and the ultrasonic device 84. The ultrasonic device 84 is one example of a detection device according to the present disclosure. The ultrasonic device 84 is configured to send ultrasonic waves to the fluid in the coating medium line 50b, to sense echo signals induced in the fluid by the ultrasonic waves, and to convert the echo signals to electronic response data 86. The coating medium line 50b comprises a straight and unobstructed bore with constant diameter through the valve arrangement 30 and through the ultrasonic device 84.

The ultrasonic device 84 of this example comprises a first ultrasonic transducer 88 and a second ultrasonic transducer 90, here arranged downstream of the first ultrasonic transducer 88. The control system 60 is configured to control the ultrasonic device 84 and to receive the electronic response data 86 from each of the first ultrasonic transducer 88 and the second ultrasonic transducer 90.

As shown in Fig. 4, the coating medium line 50b is unobstructed from the starting position 76, through the valve arrangement 30 and through the ultrasonic device 84. The apparatus 14b therefore has substantially fewer coating medium traps than prior art apparatuses. In this example, the interior surface of the coating medium line 50b has a constant internal diameter from the starting position 76 to the step 78.

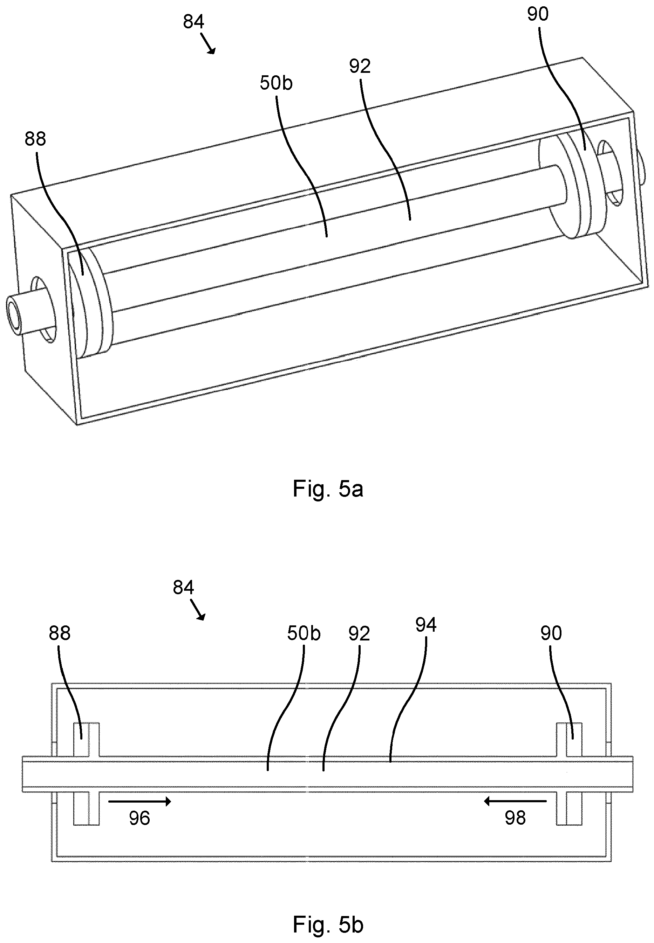

Fig. 5a schematically represents a perspective view of the ultrasonic device 84, and Fig. 5b schematically represents a cross-sectional side view of the ultrasonic device 84. With collective reference to Figs. 5a and 5b, the ultrasonic device 84 comprises a tube 92. The tube 92 is here straight and rigid. The tube 92 may for example be made of plastic or metal. In this implementation, the tube 92 constitutes a part of the coating medium line 50b. In Fig. 5b, the interior surface 94 of the coating medium line 50b can be seen.

Each of the first ultrasonic transducer 88 and the second ultrasonic transducer 90 surrounds the coating medium line 50b and is arranged entirely outside the coating medium line 50b. The fluid flowing through the coating medium line 50b is thereby not interfered with. The straight tube 92 and the arrangement of the ultrasonic device 84 outside the coating medium line 50b thus provide an unobstructed flow path for the fluid.

The first ultrasonic transducer 88 comprises a first ultrasonic transmitter and a first ultrasonic receiver (not denoted). The second ultrasonic transducer 90 comprises a second ultrasonic transmitter and a second ultrasonic receiver (not denoted). The first ultrasonic transmitter is configured to send ultrasonic waves in a first direction 96. Echo signals induced in the fluid by the ultrasonic waves in the first direction 96 are sensed by the second ultrasonic receiver. The second ultrasonic transmitter is configured to send ultrasonic waves in a second direction 98, opposite to the first direction 96. Echo signals induced in the fluid by the ultrasonic waves in the second direction 98 are sensed by the first ultrasonic receiver. Each ultrasonic transducer 88 and 90 may for example be configured to determine a time of flight of the ultrasonic waves therebetween. The time of flight may be communicated to the control system 60 as electronic response data 86.

During coating medium application, the ultrasonic device 84 continuously subjects the coating medium 16 in coating medium line 50b to ultrasonic pulses and provides corresponding electronic response data 86. The ultrasonic device 84 provides possibilities to determine properties related to the flow of coating medium 16 (or other fluids passing therethrough), such as bubble detection and speed of sound measurements. The control system 60 can determine one or more parameter values of the fluid in real time based on the electronic response data 86 from the ultrasonic device 84. In this example, a speed of sound through the coating medium 16 in the coating medium line 50b and between the ultrasonic transducers 88 and 90 is used as a parameter of the coating medium 16.

The ultrasonic device 84 and the flow control valve 80 are used a flow regulating device. The flow control valve 80 is controlled based on the electronic response data 86 from the ultrasonic device 84. However, the ultrasonic device 84 can also be used to detect successful passage of the sealing member 82. The ultrasonic signal will drop to zero as the sealing member 82 passes between the ultrasonic transducers 88 and 90.

As shown in Figs. 5a and 5b, the ultrasonic device 84 does not obstruct the coating medium line 50b. The coating medium 16 and the sealing member 82 can thereby pass unobstructedly through the ultrasonic device 84.

In prior art coating apparatuses where a gear pump and/or a gear flow meter is positioned inside a coating medium line 50b, the paint trapped inside these devices are lost during a color change. In such apparatuses, the coating medium 16 loss originating from the gear pump and/or the gear flow meter represents a significant portion of the total loss. By removing this loss by passing the sealing member 82 through the ultrasonic device 84, large cost savings and reduction of the environmental impact can be achieved.

In the example in Fig. 4, the total volume of coating medium 16 inside the coating medium line 50b between the starting position 76 and the atomizer 20 is known. When a coating process with a first coating medium 16 is almost finished, the first coating medium valve 32 closes and the first cleaning medium valve 66 opens. This causes cleaning medium from the cleaning medium source 26 to be supplied to the starting position 76 of the coating medium line 50b, upstream of the sealing member 82. The pressure from the cleaning medium causes the sealing member 82 to be pushed forward in the coating medium line 50b. During the forward movement of the sealing member 82, the coating medium 16 downstream of the sealing member 82 is pushed out through the atomizer 20 by the sealing member 82. The coating process can thereby be continued despite the first coating medium valve 32 being closed. A substantial amount of the remaining coating medium 16 in front of the sealing member 82 is pushed out through the atomizer 20. Thus, instead of wasting this coating medium 16, it is used to coat the object 18. This removes a significant portion of the total coating medium loss associated with the coating process.

During forward movement of the sealing member 82, the sealing member 82 seals against the interior surface 94 and creates a barrier between the coating medium 16 downstream of the sealing member 82 and the cleaning medium upstream of the sealing member 82. The sealing member 82 prevents mixing of the downstream coating medium 16 and the upstream cleaning medium.

As an alternative way to push the sealing member 82 forward, the first compressor valve 72 may open to introduce pressurized air from the compressor 28 to the starting position 76 of the coating medium line 50b, upstream of the sealing member 82.

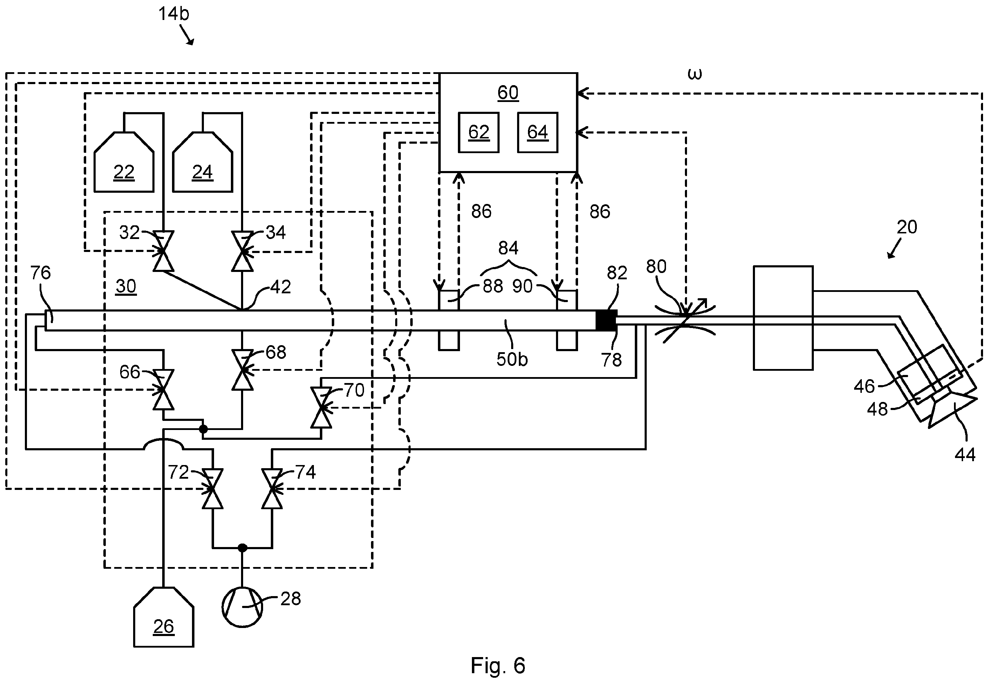

Fig. 6 schematically represents a block diagram of the coating apparatus 14b in Fig. 4 when the sealing member 82 has moved in the coating medium line 50b. The sealing member 82 has moved in the coating medium line 50b in the downstream direction towards the atomizer 20, from the starting position 76, through the valve arrangement 30, through the ultrasonic device 84, and to the step 78. During the movement, the sealing member 82 seals against the interior surface 94 of the coating medium line 50b. Since the step 78 is smaller than the sealing member 82, the sealing member 82 is stopped by the step 78.

When the sealing member 82 passes through the ultrasonic device 84, the ultrasonic device 84 detects the passing of the sealing member 82 by means of ultrasonic waves sent through the coating medium line 50b. That is, based on the electronic response data 86, the control system 60 can conclude that the sealing member 82 has passed through the ultrasonic device 84.

In order to return the sealing member 82 to the starting position 76, the second compressor valve 74 may open to introduce pressurized air from the compressor 28 to the coating medium line 50b downstream of the step 78 and the sealing member 82. This introduced pressurized air causes the sealing member 82 to return backwards in the coating medium line 50b back to the starting position 76.

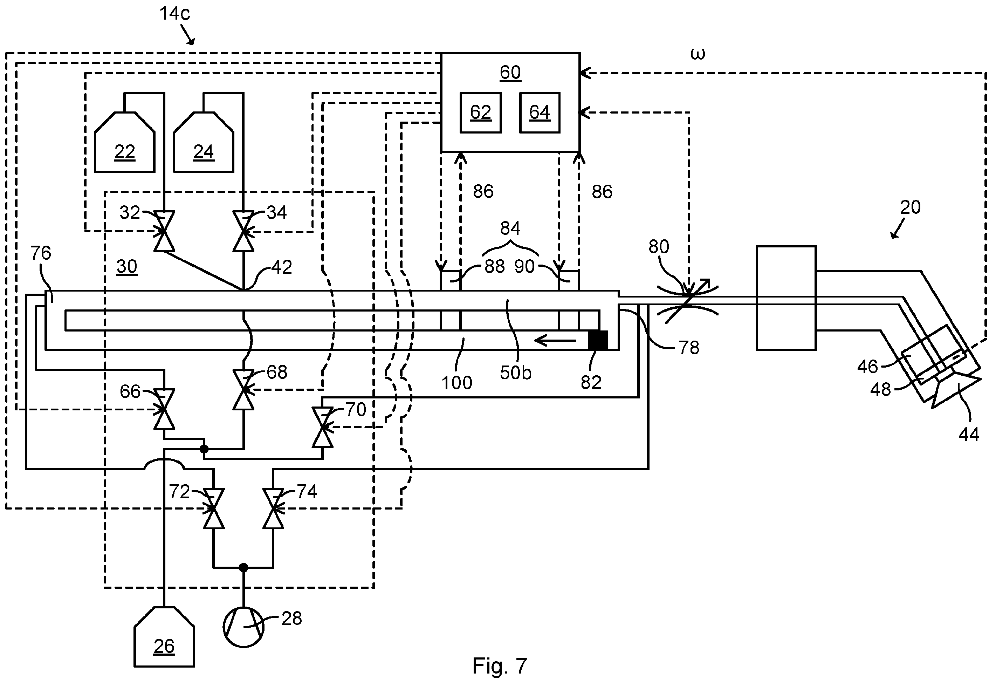

Fig. 7 schematically represents a block diagram of a further coating apparatus 14c. Mainly differences with respect to Figs. 4 to 6 will be described. The apparatus 14c in Fig. 7 further comprises a return line 100. The return line 100 is arranged in parallel with the coating medium line 50b. An inlet of the return line 100 is positioned in the coating medium line 50b between the ultrasonic device 84 and the step 78. An outlet of the return line 100 is positioned at the starting position 76 of the coating medium line 50b.

Once the sealing member 82 has reached the step 78, the sealing member 82 can be forced into the return line 100 by a pressurized medium. A plurality of sealing members 82 can be stored in the return line 100. In addition to returning the sealing members 82 to the starting position 76, the return line 100 can thereby also function as a magazine.

While the present disclosure has been described with reference to exemplary embodiments, it will be appreciated that the present invention is not limited to what has been described above. For example, it will be appreciated that the dimensions of the parts may be varied as needed. Accordingly, it is intended that the present invention may be limited only by the scope of the claims appended hereto.

## Claims

1. A method of monitoring cleaning of an apparatus (14a) for applying a coating medium (16) to an object (18), the apparatus (14a) comprising:
- a rotatable deflecting element (44) for atomizing the coating medium (16); and
- a cleaning medium line (58) for conducting a cleaning medium to the deflecting element (44);
where the method comprises:
- commanding performance of a cleaning operation comprising delivery of the cleaning medium through the cleaning medium line (58) towards the deflecting element (44) while rotating the deflecting element (44);
- collecting operational values of at least one operational parameter of the apparatus (14a) for the cleaning operation;
- comparing the operational values with reference values of the at least one operational parameter for the cleaning operation; and
- determining whether the cleaning operation was successful or unsuccessful based on the comparison.

2. The method according to claim 1, wherein the at least one operational parameter comprises a parameter indicative of a rotational speed (ω) of the deflecting element (44).

3. The method according to any of the preceding claims, wherein the apparatus (14a) further comprises a turbine (46) arranged to drive rotation of the deflecting element (44) and arranged to be driven by pressurized air.

4. The method according to claim 3, wherein the at least one operational parameter is a parameter indicative of the pressurized air.

5. The method according to claim 3 or 4, wherein the apparatus (14a) further comprises an air flow regulator (54) arranged to regulate a flow of the pressurized air, and wherein the at least one operational parameter is a parameter indicative of a state of the air flow regulator (54).

6. An apparatus (14a) for applying a coating medium (16) to an object (18), the apparatus (14a) comprising:
- a rotatable deflecting element (44) for atomizing the coating medium (16);
- a cleaning medium line (58) for conducting a cleaning medium to the deflecting element (44); and
- a control system (60) comprising at least one data processing device (62) and at least one memory (64) having a computer program stored thereon, the computer program comprising program code which, when executed by the at least one data processing device (62), causes the at least one data processing device (62) to perform the steps of:
- commanding performance of a cleaning operation comprising delivery of the cleaning medium through the cleaning medium line (58) towards the deflecting element (44) while commanding the deflecting element (44) to rotate;
- collecting operational values of at least one operational parameter of the apparatus (14b, 14c) for the cleaning operation;
- comparing the operational values with reference values of the at least one operational parameter for the cleaning operation; and
- determining whether the cleaning operation was successful or unsuccessful based on the comparison.

7. A robot system (10) comprising an industrial robot (12) and an apparatus (14a-14c) according to claim 6.

## Patentansprüche

1. Überwachungsverfahren einer Reinigung einer Einrichtung (14a) zum Aufbringen eines Beschichtungsmediums (16) auf einen Gegenstand (18), wobei die Einrichtung (14a) Folgendes umfasst:
- ein drehbares Ablenkelement (44) zum Zerstäuben des Beschichtungsmediums (16); und
- eine Reinigungsmittelleitung (58) zum Leiten eines Reinigungsmittels zu dem Ablenkelement (44);
wobei das Verfahren Folgendes umfasst:
- Anweisen der Durchführung eines Reinigungsvorgangs, der die Zufuhr des Reinigungsmittels durch die Reinigungsmittelleitung (58) in Richtung des Ablenkelements (44) umfasst, während das Ablenkelement (44) gedreht wird;
- Sammeln von Betriebswerten zumindest eines Betriebsparameters der Einrichtung (14a) für den Reinigungsvorgang;
- Vergleichen der Betriebswerte mit Referenzwerten des zumindest einen Betriebsparameters für den Reinigungsvorgang; und
- Bestimmen, ob der Reinigungsvorgang erfolgreich oder nicht erfolgreich war, basierend auf dem Vergleich.

2. Verfahren nach Anspruch 1, wobei der zumindest eine Betriebsparameter einen Parameter umfasst, der indikativ für eine Drehzahl (ω) des Ablenkelements (44) ist.

3. Verfahren nach einem der vorhergehenden Ansprüche, wobei die Einrichtung (14a) ferner eine Turbine (46) umfasst, die dazu ausgelegt ist, die Drehung des Ablenkelements (44) anzutreiben, und angeordnet ist, um durch Druckluft angetrieben zu werden.

4. Verfahren nach Anspruch 3, wobei der zumindest eine Betriebsparameter ein Parameter ist, der indikativ für die Druckluft ist.

5. Verfahren nach Anspruch 3 oder 4, wobei die Einrichtung (14a) ferner einen Luftstromregler (54) umfasst, der dazu ausgelegt ist, einen Strom der Druckluft zu regulieren, und wobei der zumindest eine Betriebsparameter ein Parameter ist, der indikativ für einen Zustand des Luftstromreglers (54) ist.

6. Einrichtung (14a) zum Aufbringen eines Beschichtungsmediums (16) auf einen Gegenstand (18), wobei die Einrichtung (14a) Folgendes umfasst:
- ein drehbares Ablenkelement (44) zum Zerstäuben des Beschichtungsmediums (16);
- eine Reinigungsmittelleitung (58) zum Leiten eines Reinigungsmittels zu dem Ablenkelement (44); und
- ein Steuersystem (60), umfassend zumindest eine Datenverarbeitungsvorrichtung (62) und zumindest einen Speicher (64) mit einem darauf gespeicherten Computerprogramm, wobei das zumindest eine Computerprogramm einen Programmcode umfasst, der beim Ausführen durch die zumindest eine Datenverarbeitungsvorrichtung (62) die zumindest eine Datenverarbeitungsvorrichtung (62) veranlasst, die folgenden Schritte durchzuführen:
- Anweisen der Durchführung eines Reinigungsvorgangs, der die Zufuhr des Reinigungsmittels durch die Reinigungsmittelleitung (58) in Richtung des Ablenkelements (44) umfasst, während das Ablenkelement (44) angewiesen wird, sich zu drehen;
- Sammeln von Betriebswerten zumindest eines Betriebsparameters der Einrichtung (14b, 14c) für den Reinigungsvorgang;
- Vergleichen der Betriebswerte mit Referenzwerten des zumindest einen Betriebsparameters für den Reinigungsvorgang; und
- Bestimmen, ob der Reinigungsvorgang erfolgreich oder nicht erfolgreich war, basierend auf dem Vergleich.

7. Robotersystem (10), das einen Industrieroboter (12) und eine Einrichtung (14a-14c) nach Anspruch 6 umfasst.

## Revendications

1. Procédé de surveillance du nettoyage d'un appareil (14a) destiné à appliquer un matériau de revêtement (16) sur un objet (18), l'appareil (14a) comprenant :
- un élément déflecteur rotatif (44) pour atomiser le matériau de revêtement (16) ; et
- une conduite de milieu de nettoyage (58) pour conduire un milieu de nettoyage vers l'élément déflecteur (44) ;
le procédé comprenant :
- la commande de l'exécution d'une opération de nettoyage comprenant la distribution du milieu de nettoyage à travers la conduite de milieu de nettoyage (58) vers l'élément déflecteur (44) pendant la rotation de l'élément déflecteur (44) ;
- la collecte de valeurs de fonctionnement d'au moins un paramètre de fonctionnement de l'appareil (14a) pour l'opération de nettoyage ;
- la comparaison des valeurs de fonctionnement à des valeurs de référence du ou des paramètres de fonctionnement pour l'opération de nettoyage ; et
- la détermination de si l'opération de nettoyage a abouti ou n'a pas abouti en fonction de la comparaison.

2. Procédé selon la revendication 1, dans lequel le ou les paramètres de fonctionnement comprennent un paramètre indiquant une vitesse de rotation (ω) de l'élément déflecteur (44).

3. Procédé selon l'une quelconque des revendications précédentes, dans lequel l'appareil (14a) comprend en outre une turbine (46) agencée pour entraîner la rotation de l'élément déflecteur (44) et agencée pour être entraînée par de l'air sous pression.

4. Procédé selon la revendication 3, dans lequel le ou les paramètres de fonctionnement sont un paramètre indiquant l'air sous pression.

5. Procédé selon la revendication 3 ou 4, dans lequel l'appareil (14a) comprend en outre un régulateur de débit d'air (54) agencé pour réguler un débit de l'air sous pression, et dans lequel le ou les paramètres de fonctionnement sont un paramètre indiquant un état du régulateur de débit d'air (54).

6. Appareil (14a) destiné à appliquer un matériau de revêtement (16) sur un objet (18), l'appareil (14a) comprenant :
- un élément déflecteur rotatif (44) pour atomiser le matériau de revêtement (16) ;
- une conduite de milieu de nettoyage (58) pour conduire un milieu de nettoyage vers l'élément déflecteur (44) ; et
- un système de commande (60) comprenant au moins un dispositif de traitement de données (62) et au moins une mémoire (64) sur laquelle est stocké un programme informatique, le programme informatique comprenant du code de programme qui, lorsqu'il est exécuté par le ou les dispositifs de traitement de données (62), amène le ou les dispositifs de traitement de données (62) à exécuter les étapes suivantes :
- la commande de l'exécution d'une opération de nettoyage comprenant la distribution du milieu de nettoyage à travers la conduite de milieu de nettoyage (58) vers l'élément déflecteur (44) pendant la commande de l'élément déflecteur (44) en rotation ;
- la collecte de valeurs de fonctionnement d'au moins un paramètre de fonctionnement de l'appareil (14b, 14c) pour l'opération de nettoyage ;
- la comparaison des valeurs de fonctionnement à des valeurs de référence du ou des paramètres de fonctionnement pour l'opération de nettoyage ; et
- la détermination de si l'opération de nettoyage a abouti ou n'a pas abouti en fonction de la comparaison.

7. Système robot (10), comprenant un robot industriel (12) et un appareil (14a-14c) selon la revendication 6.
